# EUROPÄISCHE PATENTSCHRIFT

(11) **EP 3 481 696 B1**
(45) Veröffentlichungstag und Bekanntmachung des Hinweises auf die Patenterteilung: **27.05.2020**
(21) Anmeldenummer: 17736670.5
(22) Anmeldetag: 06.07.2017
(51) Int. Cl.: B62D 1/06

(54) **VORRICHTUNG UND VERFAHREN ZUM HEIZEN EINES LENKRADS UND ZUR ERFASSUNG EINER LENKRADBERÜHRUNG**
APPARATUS AND METHOD FOR HEATING A STEERING WHEEL AND FOR SENSING CONTACT WITH THE STEERING WHEEL
DISPOSITIF ET PROCÉDÉ DE CHAUFFAGE D'UN VOLANT ET DE DÉTECTION D'UN CONTACT AVEC LE VOLANT

(30) Priorität: 07.07.2016 DE 102016008243
(43) Veröffentlichungstag der Anmeldung: 15.05.2019
(73) Patentinhaber: ZF Automotive Safety Germany GmbH, 63743 Aschaffenburg (DE)
(72) Erfinder: HIRZMANN, Guido, 63877 Sailauf (DE); LAMMERS, Alexander, 64367 Mühltal (DE); LEFRINGHAUSEN, Heinz, 63533 Mainhausen (DE); STEGMANN, Volker, 25488 Holm (DE)
(74) Vertreter: ZF Patentabteilung - DIPS
(86) Internationale Anmeldenummer: PCT/EP2017/066935
(87) Internationale Veröffentlichungsnummer: WO 2018/007523

(56) Entgegenhaltungen:
- WO-A1-2015/179730
- WO-A1-2016/087279
- DE-A1-102014 223 128
- US-A1- 2014 151 356

## Beschreibung

Die Erfindung betrifft ein Lenkrad sowie ein Verfahren zum Heizen eines Lenkrads und zur Erfassung einer Lenkradberührung.

Es sind Berührungserkennungssysteme mit Sensoren verfügbar, die detektieren können, ob der Fahrer die Hand oder auch andere Körperteile am Lenkrad hat oder nicht. Es gibt weiterhin Lenkradkranzheizungen, die den Lenkradkranz nach Bedarf heizen können. Eine Kombination beider Systeme ist jedoch schwierig, da sie sich gegenseitig elektrisch beeinflussen können.

Aus der US 2015/0336601 A1 ist ein Lenkrad bekannt, bei dem ein in den Lenkradkranz integriertes Handberührungssensorsystem durch Anlegen einer Spannung an eine Abschirmmatte vom metallischen Lenkradskelett abgeschirmt wird. In das Lenkrad ist auch eine Lenkradheizung integriert. Der Aufbau des Lenkradkranzes sieht folgende Schichtfolge vor (von innen nach außen): Skelett - Umschäumung - Heizmatte - Abschirmmatte - Sensormatte - Hülle. Die Sensormatte, die Abschirmmatte und die Heizmatte weisen eine oder mehrere Abtastschleifen bzw. Leiterschleifen auf, die entsprechende Abtastzonen bzw. Leiterzonen definieren. Dank der Zoneneinteilung kann das Beheizen jeweils auf diejenigen Bereiche des Lenkradkranzes beschränkt werden, in denen eine Handberührung ermittelt wurde. Es wird auch vorgeschlagen, die Heizmatte gleichzeitig als Abschirmmatte zu nutzen, sodass auf eine separate Abschirmmatte verzichtet werden kann. Der Heizbetrieb und die Handberührungserkennung erfolgen alternierend in jeweils sehr kurzen Zeitintervallen mit einer jeweiligen Periodendauer von etwa 10 bis 50 Millisekunden. Während der Heizstrom für die Heizmatte etwa 4 bis 8 Ampere betragen kann, ist für die Abschirmung ein Strom von weniger als 200 Mikroampere vorgesehen. Der Heizstrom und der Abschirmstrom können von derselben oder von unterschiedlichen Stromquellen bereitgestellt werden. Nahe beieinanderliegende elektrische Leitungen des Handberührungssensorsystems sind isoliert und zusätzlich von einer Abschirmung umgeben, damit sich die übertragenen Signale nicht gegenseitig stören.

Die WO 2016/087279 A1 offenbart ein gattungsgemäßes Lenkrad für ein Kraftfahrzeug, mit einem Sensorsystem zum Erkennen einer menschlichen Hand in einem Griffbereich des Lenkrads. Das Sensorsystem umfasst dabei eine kapazitive Sensoreinrichtung mit einer Sensorstruktur, die zumindest zeitweise auch als Heizstruktur betrieben werden kann. Das Lenkrad weist ferner einen metallischen Lenkradkern auf, der als aktives Abschirmelement betrieben und mit einem definierten elektrischen Potential beaufschlagt werden kann, um eine störende kapazitive Kopplung der Sensoreinrichtung mit dem Lenkradkern zu reduzieren.

Aufgabe der Erfindung ist es, ein möglichst einfach aufgebautes und damit kostengünstiges Lenkrad zu schaffen, das sowohl beheizbar ist als auch Lenkradberührungen zuverlässig erfassen kann.

Gelöst wird diese Aufgabe durch eine Lenkrad mit den Merkmalen des Anspruchs 1 sowie durch ein Verfahren mit den Merkmalen des Anspruchs 8. Vorteilhafte und zweckmäßige Ausgestaltungen des erfindungsgemäßen Lenkrads und des erfindungsgemäßen Verfahrens sind in den zugehörigen Unteransprüchen angegeben.

Das erfindungsgemäße Lenkrad umfasst ein Lenkradskelett aus einem elektrisch leitfähigen Material und eine Vorrichtung zum Heizen des Lenkrads als auch zur Erfassung einer Lenkradberührung mit einem außerhalb des Lenkradskeletts angeordneten elektrischen Heizleiter sowie einer mit dem Lenkradskelett und dem elektrischen Heizleiter verbundenen Steuer- und Auswerteeinrichtung, mittels der der elektrische Heizleiter wiederholt zeitweise in einem Heizbetrieb als Heizelement zum Heizen des Lenkrads und zeitweise in einem Messbetrieb als Sensorelement zur Erfassung einer Lenkradberührung betrieben wird. Gemäß der Erfindung ist die Steuer- und Auswerteeinrichtung ist so eingerichtet, dass sie das Lenkradskelett zumindest während jedes Messbetriebs auf einem vorgegebenen, insbesondere konstanten Potential hält.

Die Erfindung beruht auf der Erkenntnis, dass ein elektrisch "beruhigtes" Lenkradskelett den Messbetrieb zur Erfassung von Lenkradberührungen nicht stört. Dadurch, dass das Lenkradskelett während der Messbetriebsintervalle auf einem vorgegebenen Potential gehalten wird, sind Schwankungen des elektrischen Einflusses des Lenkradskeletts auf die Messungen ausgeschlossen. Der Einfluss des Lenkradskeletts ist zeitlich konstant und kann dementsprechend als definierte Größe bei den Messungen berücksichtigt ("herausgerechnet") werden. Ein wesentlicher Vorteil dieser erfindungsgemäßen Maßnahme besteht darin, dass keine Notwendigkeit mehr besteht, den bzw. die für den Heiz- und den Messbetrieb erforderlichen elektrischen Leiter sowie auch deren Zuleitungen gegenüber dem Lenkradskelett abzuschirmen.

Das Lenkradskelett kann insbesondere über ein RCL-Glied auf dem vorgegebenen Potential gehalten werden, wobei es nicht zwingend erforderlich ist, dass das RCL-Glied drei Komponenten (Induktivität, Kondensator und Widerstand) aufweist.

Um besonders robuste Messergebnisse bei der Detektion von Lenkradberührungen zu erhalten, ist bei einer vorteilhaften Ausführungsform außerhalb des elektrischen Heizleiters eine mit der Steuer- und Auswerteeinrichtung verbundene elektrisch leitfähige Abschirmung angeordnet. Die erfindungsgemäße Abschirmung ist aber keine passive Abschirmung (Shield) im klassischen Sinne, die auf Masse liegt. Vielmehr ist die Steuer- und Auswerteeinrichtung so eingerichtet, dass sie an die Abschirmung während jedes Messbetriebs eine mit der Zeit variierende Spannung anlegt. Das von der aktiv betriebenen Abschirmung erzeugte variierende Feld geht als definierte Referenzgröße in die Messungen ein und sorgt so für bessere und zuverlässigere Ergebnisse.

Beispielsweise kann die Abschirmung gemäß einer Vorgabe auf verschiedene, vorher festgelegte, definierte Potentiale gelegt werden, wobei die Steuer- und Auswerteeinrichtung entsprechend eingerichtet ist. Alternativ kann die Abschirmung aber auch bestimmte aktuell erkannte Einflüsse aktiv kompensieren, um deutlichere Signale bei den Messungen zu erhalten.

Besonders bevorzugt sind Ausführungsformen, bei denen außer dem Lenkradskelett und dem elektrischen Heizleiter, bzw. außer dem Lenkradskelett, dem elektrischen Heizleiter und der ggf. vorhandenen Abschirmung, im Lenkrad keine weitere elektrisch angesteuerte Schicht vorhanden ist, die nicht für den Heiz- oder Messbetrieb benötigt wird. Bei diesen Ausführungsformen gibt es keine potentiellen elektrischen Störfaktoren, die die Messergebnisse beeinflussen könnten und ggf. zusätzlich berücksichtigt werden müssten, soweit dies überhaupt möglich ist. Andersherum werden dank des erfindungsgemäßen Konzepts auch keine weiteren elektrischen Funktionsschichten oder -lagen benötigt, um die gewünschte Funktionalität - abwechselnd Heizen und Messen mittels des gleichen in das Lenkrad eingebrachten elektrischen Leiters - bereitzustellen.

Erfindungsgemäß ist die Steuer- und Auswerteeinrichtung so eingerichtet, dass sie die Zeitintervalle, in denen der elektrische Heizleiter im Messbetrieb und im Heizbetrieb betrieben wird, jeweils dynamisch unter Berücksichtigung aktueller Parameter anpasst, die der Steuer- und Auswerteeinrichtung wiederholt zugeführt werden. Diese Parameter reflektieren aktuelle Gegebenheiten wie etwa die aktuell erreichte Lenkradtemperatur oder bestimmte Verkehrssituationen etc. Unter gewissen Umständen kann es z.B. sinnvoll sein, schneller oder langsamer zwischen Heizbetrieb und Messbetrieb zu wechseln oder die Intervalle einer der beiden Betriebsarten relativ zu denen der anderen Betriebsart zu verlängern oder zu verkürzen.

Der elektrische Heizleiter kann in Form einer Matte in das Lenkrad eingefügt sein. Alternativ kann der Heizleiter aber auch mittels eines besonderen Arbeitsverfahrens, das selbst nicht Gegenstand der vorliegenden Erfindung ist, als einzelner Draht in das Lenkrad eingebracht werden.

Die Erfindung schafft auch ein Verfahren zum Heizen eines Lenkrads und zur Erfassung einer Lenkradberührung, wobei das Lenkrad ein Lenkradskelett aus einem elektrisch leitfähigen Material und einen außerhalb des Lenkradskeletts angeordneten elektrischen Heizleiter aufweist, die beide mit einer Steuer- und Auswerteeinrichtung verbunden sind. Das erfindungsgemäße Verfahren umfasst folgenden Schritt: Betreiben des elektrischen Heizleiters alternierend in einem Heizbetrieb als Heizelement zum Heizen des Lenkrads und in einem Messbetrieb als Sensorelement zur Erfassung einer Lenkradberührung, wobei das Lenkradskelett zumindest während jedes Messbetriebs auf einem vorgegebenen, insbesondere konstanten Potential gehalten wird.

Bezüglich der Vorteile des erfindungsgemäßen Verfahrens wird auf die entsprechenden Ausführungen zur erfindungsgemäßen Vorrichtung verwiesen.

Gemäß der weiter oben beschriebenen vorteilhaften Ausführungsform kann beim erfindungsgemäßen Verfahren vorgesehen sein, dass an eine außerhalb des elektrischen Heizleiters angeordnete und mit der Steuer- und Auswerteeinrichtung verbundene elektrisch leitfähige Abschirmung während jedes Messbetriebs eine mit der Zeit variierende Spannung angelegt wird. Dabei kann die Abschirmung, wie bereits erwähnt, gemäß einer Vorgabe auf verschiedene, vorher festgelegte, definierte Potentiale gelegt werden, oder die Abschirmung kann bestimmte aktuell erkannte Einflüsse aktiv kompensieren, um deutlichere Signale bei den Messungen zu erhalten.

Erfindungsgemäß passt die Steuer- und Auswerteeinrichtung die Zeitintervalle, in denen der elektrische Heizleiter im Messbetrieb und im Heizbetrieb betrieben wird, jeweils dynamisch an, unter Berücksichtigung aktueller Parameter, die der Steuer- und Auswerteeinrichtung wiederholt zugeführt werden.

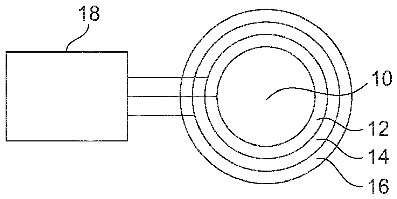

Weitere Merkmale und Vorteile der Erfindung ergeben sich aus der nachfolgenden Beschreibung und aus der beigefügten Zeichnung, auf die Bezug genommen wird. In der Zeichnung zeigt die einzige Figur schematisch eine Querschnittansicht eines Lenkrads mit einer erfindungsgemäßen Vorrichtung zum Heizen des Lenkrads und zur Erfassung einer Lenkradberührung.

Der Lenkradkranz weist im Inneren ein Lenkradskelett 10 aus einem elektrisch leitfähigen Material auf. Außerhalb des Lenkradskeletts 10 ist ein elektrischer Heizleiter 12 angeordnet. Der elektrische Heizleiter 12 ist z.B. in Form einer Matte in den Lenkradkranz eingefügt, kann aber auch mittels eines besonderen Arbeitsverfahrens als einzelner Draht in den Lenkradkranz eingebracht sein.

Außerhalb des Heizleiters 12 ist eine optionale, elektrisch leitfähige Abschirmung 14 angeordnet. Die äußerste Schicht des Lenkradkranzes ist eine Ummantelung 16. Selbstverständlich kann der Lenkradkranz weitere Schichten umfassen. Von Interesse sind hier aber nur die Elemente 10 und 12 sowie gegebenenfalls 14.

Das Lenkradskelett 10, der Heizleiter 12 und gegebenenfalls die Abschirmung 14 sind mit einer Steuer- und Auswerteeinrichtung 18 verbunden, die als zentrale Einheit oder in Form von mehreren einzelnen Einheiten ausgebildet sein kann.

Mit der schematisch in der Figur gezeigten Vorrichtung kann das Lenkrad einerseits beheizt werden. Andererseits dient die Vorrichtung auch zur Erfassung einer Lenkradberührung. Dabei hat der elektrische Heizleiter 12 eine Doppelfunktion als Heizelement und als Sensorelement. Mittels der entsprechend ausgelegten Steuer- und Auswerteeinrichtung 18 wird der elektrische Heizleiter 12 wiederholt zeitweise in einem Heizbetrieb als Heizelement zum Heizen des Lenkrads und zeitweise in einem Messbetrieb als Sensorelement zur Erfassung einer Lenkradberührung betrieben.

Eine Besonderheit ist, dass die Steuer- und Auswerteeinrichtung so eingerichtet ist, dass sie das Lenkradskelett 10 zumindest während jedes Messbetriebs auf einem vorgegebenen, insbesondere konstanten Potential hält. Das Lenkradskelett 10 wird also elektrisch "beruhigt", sodass es den Messbetrieb zur Erfassung von Lenkradberührungen nicht stört.

Das Lenkradskelett 10 wird hierzu während der Messbetriebsintervalle auf einem vorgegebenen Potential gehalten, vorzugsweise von einem RCL-Glied (nicht gezeigt). Dadurch werden Schwankungen des elektrischen Einflusses des Lenkradskeletts 10 auf die Messungen ausgeschlossen, da er zeitlich konstant ist und als definierte Größe bei den Messungen berücksichtigt ("herausgerechnet") wird.

Dank der optionalen elektrisch leitfähigen Abschirmung 14 lassen sich besonders robuste Messergebnisse bei der Detektion der Lenkradberührungen erhalten. Die Abschirmung 14 ist keine passive Abschirmung (Shield), die nur auf Masse liegt. Die Steuer- und Auswerteeinrichtung 18 legt an die Abschirmung 14 während jedes Messbetriebs eine mit der Zeit variierende Spannung an. Das von der aktiv betriebenen Abschirmung 14 erzeugte variierende Feld wird als definierte Referenzgröße in die Messungen einbezogen, wodurch bessere und zuverlässigere Ergebnisse erzielt werden.

Einerseits kann die Abschirmung 14 gemäß einer Vorgabe von der Steuer- und Auswerteeinrichtung 18 auf verschiedene, vorher festgelegte Potentiale gelegt werden. Andererseits kann die Abschirmung 14 aber auch bestimmte aktuell erkannte Einflüsse aktiv kompensieren, um robustere Signale bei den Messungen zu ermöglichen.

Abgesehen vom Lenkradskelett 10, dem elektrischen Heizleiter 12 und gegebenenfalls der Abschirmung 14 weist der Lenkradkranz für den Heiz- oder Messbetrieb keine weitere elektrisch angesteuerte Schicht auf.

Die Steuer- und Auswerteeinrichtung 18 sorgt dafür, dass die Zeitintervalle, in denen der elektrische Heizleiter 12 im Messbetrieb und im Heizbetrieb betrieben wird, jeweils dynamisch unter Berücksichtigung aktueller Parameter angepasst werden. Die entsprechenden Parameterwerte, wie etwa die aktuell erreichte Lenkradtemperatur oder bestimmte Verkehrssituationen etc., ermöglichen eine Einschätzung der aktuellen Gegebenheiten und werden der Steuer- und Auswerteeinrichtung 18 wiederholt zugeführt.

## Patentansprüche

1. Lenkrad umfassend
ein Lenkradskelett (10) aus einem elektrisch leitfähigen Material sowie
eine Vorrichtung zum Heizen des Lenkrads und zur Erfassung einer Lenkradberührung, mit
einem außerhalb des Lenkradskeletts (10) angeordneten elektrischen Heizleiter (12) sowie
einer mit dem Lenkradskelett (10) und dem elektrischen Heizleiter (12) verbundenen Steuer- und Auswerteeinrichtung (18), mittels der der elektrische Heizleiter (12) wiederholt zeitweise in einem Heizbetrieb als Heizelement zum Heizen des Lenkrads und zeitweise in einem Messbetrieb als Sensorelement zur Erfassung einer Lenkradberührung betrieben wird,
wobei die Steuer- und Auswerteeinrichtung (18) so eingerichtet ist, dass sie das Lenkradskelett (10) zumindest während jedes Messbetriebs auf einem vorgegebenen, insbesondere konstanten Potential hält,
**dadurch gekennzeichnet, dass** die Steuer- und Auswerteeinrichtung (18) so eingerichtet ist, dass sie die Zeitintervalle, in denen der elektrische Heizleiter im Messbetrieb und im Heizbetrieb betrieben wird, jeweils dynamisch unter Berücksichtigung aktueller Parameter anpasst, die der Steuer- und Auswerteeinrichtung (18) wiederholt zugeführt werden.

2. Lenkrad nach Anspruch 1, **dadurch gekennzeichnet, dass** das Lenkradskelett (10) über ein RCL-Glied auf dem vorgegebenen Potential gehalten wird.

3. Lenkrad nach Anspruch 1 oder 2, **dadurch gekennzeichnet, dass** außerhalb des elektrischen Heizleiters (12) ein mit der Steuer- und Auswerteeinrichtung (18) verbundene elektrisch leitfähige Abschirmung (14) angeordnet ist und die Steuer- und Auswerteeinrichtung (18) so eingerichtet ist, dass sie an die Abschirmung (14) während jedes Messbetriebs eine mit der Zeit variierende Spannung anlegt.

4. Lenkrad nach Anspruch 3, **dadurch gekennzeichnet, dass** die Steuer- und Auswerteeinrichtung (18) so eingerichtet ist, dass sie die Abschirmung (14) auf verschiedene definierte Potentiale legt.

5. Lenkrad nach einem der vorhergehenden Ansprüche, **dadurch gekennzeichnet, dass** außer dem Lenkradskelett (10) und dem elektrischen Heizleiter (12) bzw. außer dem Lenkradskelett (10), dem elektrischen Heizleiter (12) und der Abschirmung (14) im Lenkrad keine weitere elektrisch angesteuerte Schicht vorhanden ist, die nicht für den Heiz- oder Messbetrieb benötigt wird.

6. Lenkrad nach einem der vorhergehenden Ansprüche, **dadurch gekennzeichnet, dass** der elektrische Heizleiter (12) in Form einer Matte in das Lenkrad eingefügt ist.

7. Verfahren zum Heizen eines Lenkrads und zur Erfassung einer Lenkradberührung, wobei das Lenkrad ein Lenkradskelett (10) aus einem elektrisch leitfähigen Material und einen außerhalb des Lenkradskeletts (10) angeordneten elektrischen Heizleiter (12) aufweist, die beide mit einer Steuer- und Auswerteeinrichtung (18) verbunden sind, mit folgendem Schritt:
- Betreiben des elektrischen Heizleiters (12) alternierend in einem Heizbetrieb als Heizelement zum Heizen des Lenkrads und in einem Messbetrieb als Sensorelement zur Erfassung einer Lenkradberührung, wobei das Lenkradskelett (10) zumindest während jedes Messbetriebs auf einem vorgegebenen, insbesondere konstanten Potential gehalten wird, und wobei die Steuer- und Auswerteeinrichtung (18) die Zeitintervalle, in denen der elektrische Heizleiter (12) im Messbetrieb und im Heizbetrieb betrieben wird, jeweils dynamisch anpasst, unter Berücksichtigung aktueller Parameter, die der Steuer- und Auswerteeinrichtung (18) wiederholt zugeführt werden.

8. Verfahren nach Anspruch 7, **dadurch gekennzeichnet, dass** an eine außerhalb des elektrischen Heizleiters (12) angeordnete und mit der Steuer- und Auswerteeinrichtung (18) verbundene elektrisch leitfähige Abschirmung (14) während jedes Messbetriebs eine mit der Zeit variierende Spannung angelegt wird.

9. Verfahren nach Anspruch 8, **dadurch gekennzeichnet, dass** die Abschirmung (14) auf verschiedene definierte Potentiale gelegt wird.

## Claims

1. A steering wheel comprising
a steering wheel skeleton (10) made from electrically conductive material and
an apparatus for heating the steering wheel and for sensing contact with the steering wheel, comprising
an electric heating conductor (12) disposed outside the steering wheel skeleton (10) and
a control and evaluating means (18) connected to the steering wheel skeleton (10) and the electric heating conductor (12) by means of which the electric heating conductor (12) is repeatedly operated temporarily in a heating operation as heating element for heating the steering wheel and temporarily in a measuring operation as sensor element for sensing contact with the steering wheel,
wherein the control and evaluating means (18) is configured to maintain the steering wheel skeleton (10) on a predetermined, especially constant potential at least during each measuring operation,
**characterized in that** the control and evaluating means (18) is configured to dynamically adapt each of the time intervals in which the electric heating conductor is operated in the measuring operation and in the heating operation with consideration of current parameters which are repeatedly supplied to the control and evaluating means (18).

2. The steering wheel according to claim 1, **characterized in that** the steering wheel skeleton (10) is maintained on the predetermined potential via an RCL member.

3. The steering wheel according to claim 1 or 2, **characterized in that** an electrically conductive shield (14) connected to the control and evaluating means (18) is arranged outside the electric heating conductor (12) and **in that** the control and evaluating means (18) is configured to apply voltage varying over time during each measuring operation to the shield (14).

4. The steering wheel according to claim 3, **characterized in that** the control and evaluating means (18) is configured to lay the shield (14) on different defined potentials.

5. The steering wheel according to any one of the preceding claims, **characterized in that**, apart from the steering wheel skeleton (10) and the electric heating conductor (12) and, resp., apart from the steering wheel skeleton (10), the electric heating conductor (12) and the shield (14), no further electrically controlled layer that is not required for the heating or measuring operation is present in the steering wheel.

6. The steering wheel according to any one of the preceding claims, **characterized in that** the electric heating conductor (12) is incorporated in the steering wheel in the form of a mat.

7. A method for heating a steering wheel and for sensing contact with the steering wheel, the steering wheel including a steering wheel skeleton (10) made from electrically conductive material and an electric heating conductor (12) disposed outside the steering wheel skeleton (10) both of which are connected to a control and evaluating means (18), comprising the following step of:
- operating the electric heating conductor (12) in a heating operation as heating element for heating the steering wheel alternating with a measuring operation as sensor element for sensing contact with the steering wheel, wherein the steering wheel skeleton (10) is maintained on a predetermined, especially constant, potential at least during each measuring operation, and wherein the control and evaluating means (18) dynamically adapts each of the time intervals in which the electric heating conductor (12) is operated in the measuring operation and in the heating operation with consideration of current parameters which are repeatedly supplied to the control and evaluating means (18).

8. The method according to claim 7, **characterized in that** during each measuring operation voltage varying over time is applied to an electrically conductive shield (14) which is disposed outside the electric heating conductor (12) and is connected to the control and evaluating means (18).

9. The method according to claim 8, **characterized in that** the shield (14) is laid on different defined potentials.

## Revendications

1. Volant comprenant
Une armature de volant (10) en un matériau électriquement conducteur et
un dispositif pour chauffer le volant et pour détecter un
contact au volant, avec un conducteur électrique chauffant (12) disposé à l'extérieur de l'armature du volant (10) et un dispositif de commande et d'évaluation (1 8) connecté à l'armature du volant (10) et au conducteur électrique chauffant (12), au moyen duquel le conducteur électrique chauffant (12) sera utilisé alternativement fonctionnant parfois dans un mode de chauffage comme élément chauffant pour chauffer le volant et parfois dans un mode de mesure comme élément capteur pour détecter un contact avec le volant,
pour lequel le dispositif de commande et d'évaluation (18) est configuré de sorte que
l'armature du volant (10) maintient un potentiel prédéterminé, en particulier constant, au moins pendant chaque opération de mesure, **caractérisé en ce que** le dispositif de commande et d'évaluation (18) est configuré de manière à contrôler les intervalles de temps pendant lesquels le conducteur électrique chauffant fonctionne alternativement en opération de mesure et en opération de chauffage , chacun s'adaptant dynamiquement en tenant compte des paramètres actuels, qui sont alimentés alternativement au dispositif de commande et d'évaluation (18).

2. Volant selon la revendication 1, **caractérisé en ce que** l'armature du volant (10) est maintenue au potentiel prédéterminé via un circuit électronique RCL.

3. Volant selon la revendication 1 ou 2, **caractérisé en ce qu'**un blindage électriquement conducteur (14) relié au dispositif de commande et d'évaluation (18) est disposé à l'extérieur du conducteur électrique chauffant (12) et que le dispositif de commande et d'évaluation (18) est disposé de telle manière qu'il applique une tension variable avec le temps au blindage (14) pendant chaque opération de mesure.

4. Volant selon la revendication 3, **caractérisé en ce que** le dispositif de commande et d'évaluation (18) est agencé de manière à placer le blindage (14) à différents potentiels définis.

5. Volant selon l'une des revendications précédentes, **caractérisé en ce qu'**en dehors de l'armature du volant (10) et du conducteur électrique chauffant (12) et respectivement en dehors de l'armature du volant (10), le conducteur de chauffage électrique (12) et le blindage (14) dans le volant, aucune autre couche alimentée électriquement n'est présente, ce qui n'est pas nécessaire pour l'opération de chauffage ou de mesure.

6. Volant selon l'une des revendications précédentes, **caractérisé en ce que** le conducteur électrique chauffant (12) est inséré dans le volant sous la forme d'une nappe.

7. Procédé pour chauffer un volant et pour détecter un contact avec le volant, pour lequel le volant possède une armature de volant (10) réalisée en un matériau électriquement conducteur et un conducteur électrique chauffant (12) disposé à l'extérieur de l'armature de volant (10), tous deux sont connectés à un dispositif de commande et d'évaluation (18) suivant l'étape suivante :
- faire fonctionner le conducteur électrique chauffant (12) alternativement dans un mode de chauffage comme élément chauffant pour chauffer le volant et dans un mode de mesure comme élément capteur pour détecter un contact avec le volant, l'armature du volant (10) étant maintenue à un potentiel prédéterminé, notamment constant au moins pendant chaque mode de mesure, et pour lequel le dispositif de commande et d'évaluation (18) ajuste dynamiquement les intervalles de temps pendant lesquels le conducteur électrique chauffant (12) fonctionne en mode de mesure et en mode de chauffage, en tenant compte des paramètres de courant qui sont alimentés de manière alternatives au dispositif de commande et d'évaluation (18).

8. Procédé selon la revendication 7, **caractérisé en ce qu'**une tension variable dans le temps est appliquée à un blindage électriquement conducteur (14) qui est disposé à l'extérieur du conducteur électrique chauffant (12) et est connecté au dispositif de commande et d'évaluation (18) pendant chaque opération de mesure.

9. Procédé selon la revendication 8, **caractérisé en ce que** le blindage (14) est placé sur différents potentiels définis.
